# EUROPÄISCHE PATENTSCHRIFT

(11) **EP 1 791 048 B1**
(45) Veröffentlichungstag und Bekanntmachung des Hinweises auf die Patenterteilung: **05.03.2008**
(21) Anmeldenummer: 05025832.6
(22) Anmeldetag: 25.11.2005
(51) Int. Cl.: G05B 19/418

(54) **Automatisierungssystem mit einem angeschlossenen RFID-identifizierten Sensor oder Aktor**
Automation system comprising an RFID-identified sensor or actuator
Système d'automatisation comprenant un capteur ou un actionneur identifié par un RFID

(43) Veröffentlichungstag der Anmeldung: 30.05.2007
(73) Patentinhaber: SIEMENS AKTIENGESELLSCHAFT, 80333 München (DE)
(72) Erfinder: Opaterny, Thilo, 90453 Nürnberg (DE)

(56) Entgegenhaltungen:
- WO-A-03/017015
- WO-A-20/05015330

## Beschreibung

Die Erfindung betrifft ein Automatisierungssystem mit einer Steuereinheit, an die mindestens ein Sensor oder Aktor, dem ein Stecker zum Anschluss an die Steuereinheit zugeordnet ist, angeschlossen ist, wobei ein Leser zum Auslesen von Daten auf einem RFID-Chip vorgesehen ist, die zur Verwendung in der Steuereinheit dienen.

Ein derartiges Automatisierungssystem ist aus der WO 2005/015330 A bekannt. Es betrifft ein System und Verfahren zur Identifizierung von passiven Automatisierungskomponenten, insbesondere Sensoren, Aktoren und Leistungskomponenten. Das Automatisierungsgerät weist einen Leser zum Auslesen von auf einem RFID-Chip abgespeicherten Daten auf, die zur Verwendung in der Steuereinheit dienen.

Weiterhin ist aus zahlreichen Anwendungen ein Automatisierungssystem bekannt, das zur Lösung einer Steuerungsaufgabe dient oder die Regelung eines Prozesses übernimmt. Es liest die Werte von Sensoren und Bedienelementen ein und verarbeitet diese mit internen Zuständen zu Ausgabewerten für Aktoren. Ein modernes Automatisierungssystem besteht zu einem wesentlichen Teil aus Software, damit es von den Anwendern an die Aufgabe angepasst werden kann.

Die Sensoren wandeln physikalische Größen wie Druck, Temperatur, Helligkeit usw. in elektrische Werte. Die Aktoren wandeln elektrische Energie wiederum in Kräfte, Wärme, Licht usw. um. Das Automatisierungssystem besteht aus einer Verarbeitungseinheit und vielen Baugruppen, an denen die Sensoren und Aktoren angeschlossen sind.

Die Zahl der unterschiedlichen Sensoren und Aktoren ist sehr groß. Damit nicht für jeden Sensor- oder Aktortyp eine eigene Baugruppe entwickelt werden muss, werden sie aufgrund ihrer Eigenschaften zusammengefasst. Zum Beispiel sind die meisten Temperatursensoren Widerstände. Um eine Temperatur zu messen, wird ein temperaturabhängiger Widerstand gemessen. Der Widerstandswert kann dann in einen Temperaturwert umgerechnet werden. Die Umrechung kann bereits in der Baugruppe erfolgen, wozu diese jedoch den genauen Typ des Temperatursensors kennen muss. Der Sensor- oder Aktortyp wird der Baugruppe mittels einer dafür geschaffenen Software mitgeteilt: Die Hardwarekonfiguration.

Die Hardwarekonfiguration hat zwei primäre Aufgaben. Sie passt die Baugruppen an die Sensoren und Aktoren an und stellt der Verarbeitungseinheit für jede Baugruppe die zu verwendeten Adressen zur Verfügung. Außerdem kann sie kontrollieren, ob die parametrierten Baugruppen auch real vorhanden sind. In jedoch nur wenigen Fällen wird geprüft, ob auch der richtige Sensor oder Aktor angeschlossen ist. Bei den einfacheren Sensoren, wie denn zur Temperaturmessung verwendeten Heiß- oder Kaltleitern, kann man zwar prüfen, ob überhaupt ein Widerstand angeschlossen ist, aber dessen Temperaturkoeffizient könnte durch eine Messkurve ermittelt werden. Gleiches gilt auch für die Aktoren. Ob an den Ausgang ein 10-W-Motor oder ein 10 kW-Motor angeschlossen ist, spielt für die Steuerung keine Rolle, denn beide werden mit einer Spannung von 0 V bis 10 V angesteuert. Diese Spannung wird von einer Regelung direkt am Motor in die gewünschte Leistung umgesetzt. Es gibt auch Aktoren, die mit Strömen von 4 mA bis 20 mA angesteuert werden. Eine Verwechselung dieser beiden Ausgangsarten kann fatale Folgen haben.

Die Steuerung kann nicht prüfen, ob der richtige Sensor oder Aktor angeschlossen ist. Die Hardwarekonfiguration ist mühselig und fehlerträchtig. Jeder Sensor und Aktor hat andere Eigenschaften. Die Hersteller von Sensoren müssen sehr genau arbeiten, um die geforderten Toleranzen einzuhalten. Hierzu erfolgt nach der Fertigung eine Kalibrierung, d.h. mit einem Laser erfolgt eine Feinabstimmung. Präzise lineare Sensoren sind damit sehr teuer.

Eine höhere Genauigkeit ließe sich erzielen, wenn die Kennlinien des Sensors in das Automatisierungsgerät eingegeben werden könnten. Dies jedoch ist auch wiederum sehr umständlich und fehlerträchtig. Zu jedem Sensor müsste ein Datenblatt mit der konkreten Kennlinie mitgeliefert werden und dieses dann in das Automatisierungssystem eingegeben werden. Selbst wenn diese Eingabe elektronisch erfolgt, z.B. mittels einer Diskette, sind Fehler nicht zu vermeiden. Dieser Vorgang müsste nämlich bei einem Bauteiletausch, z.B. im Ersatzteilfall, wiederholt werden.

Der Erfindung liegt die Aufgabe zugrunde, ein Automatisierungssystem der oben genannten Art und ein Verfahren zum betrieb eines solchen derart zu verbessern, dass ein einfacher Zugriff auf im RFID-Chip abgespeicherte Daten eines Sensors oder Aktors ermöglicht wird.

Die erste Aufgabe wird durch die kennzeichnenden Merkmale des Anspruchs 1 gelöst.

Vorteilhafte Weiterbildungen der Erfindung sind den nachfolgenden Ansprüchen 2 bis 4 zu entnehmen.

Die weitere Aufgabe wird gemäß den Merkmalen nach Anspruch 5 gelöst.

Ausführungsbeispiele der Erfindung werden im Folgenden anhand einer Zeichnung näher erläutert. Es zeigen:
- FIG 1: ein erstes erfindungsgemäßes Automatisierungssystem und einen hieran anzuschließenden Sensor oder Aktor und
- FIG 2: eine erfindungsgemäße Konfiguration eines Automatisierungssystems mit einem angeschlossenen Sensor oder Aktor und einem dazwischen einschleifbaren Leser.

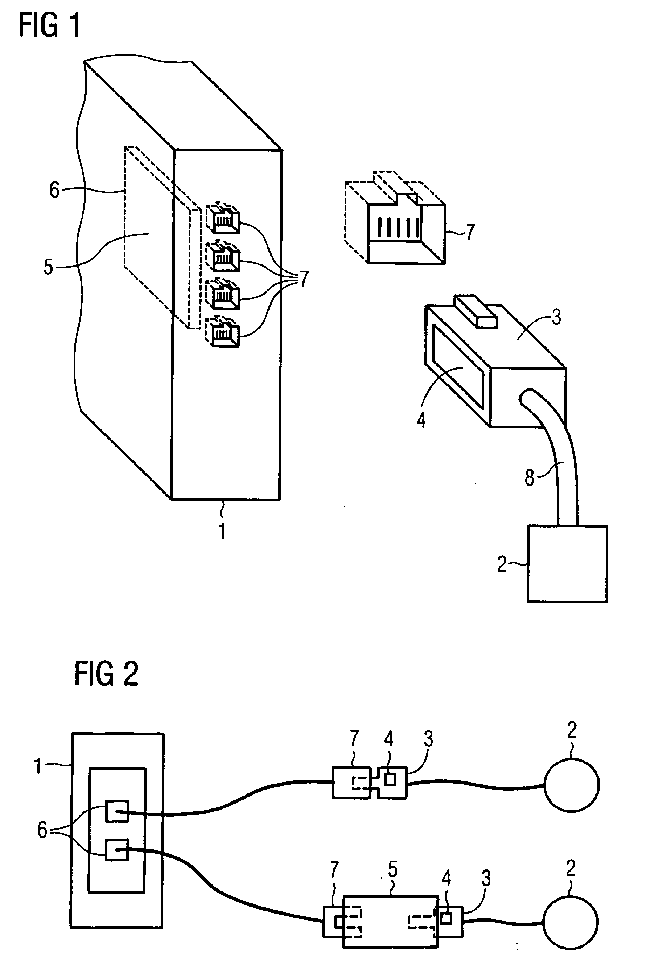

FIG 1 zeigt ein Automatisierungssystem mit einer Steuereinheit 1, die mindestens eine Baugruppe 6 mit einem integrierten Leser 5 aufweist. Die Baugruppe 6 ist mit an der Steuereinheit 1 außen zugänglichen Anschlussbuchsen 7 elektrisch verbunden. Weiterhin ist in FIG 1 ein Sensor bzw. Aktor 2 dargestellt, der über eine Leitung 8 fest mit einem Stecker 3 verbunden ist. Der Stecker 3 ist mit einem RFID-Chip 4 versehen, wenn dem relevante Daten des Sensors bzw. Aktors 2, z.B. Kennlinien, abgespeichert sind. Nach dem Einstecken des Steckers 3 in eine der Anschlussbuchsen 7 können die relevanten Daten vom integrierten Leser 5 in der Steuereinheit 1 ausgelesen werden. Damit wird sichergestellt, dass der richtige Sensor oder Aktor 2 angeschlossen ist. Die Parametrierung und Kalibrierung geschieht voll automatisch und fehlerfrei. Ein weiterer Vorteil ist, dass bei der Herstellung des Sensors oder Aktors 2 aufwändige Kalibrierungen entfallen können, da sich die Baugruppe 6 an den Sensor 2 anpassen kann und nicht der Sensor oder Aktor 2 an die Baugruppen angepasst werden muss. Beim Ersatz des Bauteils wird ohne Zutun des Anwenders die neue Kennlinie ins System übernommen. Der Wechsel des Sensors oder Aktors 2 kann vom System dokumentiert werden.

Als Zusatznutzen ergibt sich, dass bei Ablegung der Kennlinieninformation in verschlüsselter Form zertifiziert werden kann, dass ein Originalbauteil vorliegt. Somit können Nachbauten erschwert werden.

In FIG 2 ist eine erfindungsgemäße Konfiguration eines Automatisierungssystems mit einer Steuereinheit 1 dargestellt, die mit einem Sensor oder Aktor 2 elektrisch verbunden ist. Die Steuereinheit 1 weist mindestens eine Baugruppe 6 auf, die über nach außen geführte Leitungen mit als Kupplung dienenden Anschlussbuchsen 7 verbunden ist. Die FIG 2 zeigt weiterhin zwei Sensoren oder Aktoren 2, die über eine Leitung fest mit einem Stecker 3 verbunden sind. In jedem der beiden Stecker 3 ist ein RFID-Chip 4 integriert. In der FIG 2 ist oben der Normalbetrieb des Automatisierungssystems mit angeschlossenem Sensor oder Aktor 2 dargestellt, wobei der zugehörige Stecker 3 in der Anschlussbuchse 7 einsteckt. Die FIG 2 zeigt unten den Zustand der Inbetriebnahme, wobei zwischen Stecker 3 und Anschlussbuchse 7 ein Leser 5 eingeschleift ist, um die im RFID-Speicher 4 abgelegten relevanten Daten des Sensors oder Aktors 2 auszulesen und an die Baugruppe 6 weiterzuleiten. Auch auf diese Weise kann sichergestellt werden, dass der richtige Sensor oder Aktor 2 ausgelesen wird. Der Vorteil dieser Lösung besteht darin, dass die Baugruppe 6 keinen Leser mehr enthält und die Verdrahtung nicht entsprechend geändert werden muss.

Außerdem ergibt sich aus den Anordnungen gemäß den FIG 1 und 2 ein Verfahren zum Betrieb eines Automatisierungssystems, das eine Steuereinheit 1 aufweist, an die mindestens ein Sensor oder Aktor 2 angeschlossen ist. Dabei werden relevante Daten des Sensors oder Aktors 2 in einem RFID-Chip 4 abgespeichert, der in einem dem Sensor oder Aktor 2 zugeordneten Stecker 3 untergebracht ist. Mittels eines Lesers 5 werden die Daten aus dem RFID-Chip 4 ausgelesen und dann der Steuereinheit 1 zur Verfügung gestellt.

Insgesamt resultieren aus der Integration eines RFID-Chips 4 in den Anschlussstecker 3 eines Sensors oder Aktors 2 folgende Vorteile:
- Die Authentifizierung des Sensors oder Aktors 2;
- dessen automatische Parametrierung;
- die präzise Kalibrierung des Systems und
- die Zertifizierung des Sensors oder Aktors 2.

Das System wird komfortabler, präziser und sicherer, wobei die Kosten für RFID-Chips vernachlässigbar sind.

## Patentansprüche

1. Automatisierungssystem mit einer Steuereinheit (1), an die mindestens ein Sensor oder Aktor (2), dem ein Stecker (3) zum Anschluss an die Steuereinheit (1) zugeordnet ist, angeschlossen ist, wobei ein Leser (5) zum Auslesen von Daten auf einem RFID-Chip (4) vorgesehen ist, die zur Verwendung in der Steuereinheit (1) dienen, **dadurch gekennzeichnet, dass** der Stecker (3) den RFID-Chip (4) aufweist und dass die Daten, die in dem RFID-Chip (4) abgespeichert sind, relevante Daten des Aktors oder Sensors (2) sind.

2. Automatisierungssystem nach Anspruch 1, **dadurch gekennzeichnet, dass** der Stecker (3) über eine Leitung (8) mit dem Sensor oder Aktor (2) fest verbunden ist.

3. Automatisierungssystem nach Anspruch 1 oder 2, **dadurch gekennzeichnet, dass** die Steuereinheit (1) den Leser (5) beinhaltet.

4. Automatisierungssystem nach Anspruch 3, **dadurch gekennzeichnet, dass** der Leser (5) Bestandteil einer Baugruppe (6) in der Steuereinheit (1) ist.

5. Verfahren zum Betrieb eines Automatisierungssystems und einer Steuereinheit (1), an die mindestens ein Sensor oder Aktor (2), dem ein Stecker (3) zum Anschluss an die Steuereinheit (1) zugeordnet ist, angeschlossen ist, wobei ein Leser (5) zum Auslesen von Daten auf einem RFID-Chip (4) vorgesehen ist, die zur Verwendung in der Steuereinheit (1) dienen, **dadurch gekennzeichnet, dass** die Daten relevante Daten des Sensors oder Aktors (2) sind und in dem RFID-Chip (4) abgespeichert werden, der in einem dem Sensor oder Aktor (2) zugeordneten Stecker (3) untergebracht ist.

## Claims

1. Automation system with a control unit (1) connected to at least one sensor or actuator (2), to which a connector (3) for connection to the control unit (1) is assigned,, whereby a reader (5) is provided for reading out data on an RFID chip (4) which is intended for use in the control unit (1), **characterized in that** the connector (3) features the RFID chip (4) and that the data which is stored in the RFID chip (4) is relevant data of the actuator or sensor (2).

2. Automation system according to claim 1, **characterized in that** the connector (3) is permanently connected via a line (8) to the sensor or actuator (2).

3. Automation system according to claim 1 or 2, **characterized in that** the control unit (1) contains the reader (5).

4. Automation system according to claim 3, **characterized in that** the reader (5) is a component of a module (6) in the control unit (1).

5. Method for operating an automation system and a control unit (1), to which at least one sensor or actuator (2) is connected, to which a connector (3) for connection to the control unit (1) is assigned, whereby a reader (5) is provided for reading out data on an RFID chip (4) which is intended for use in the control unit (1), **characterized in that** the data is relevant data of the sensor or actuator (2) and is stored in the RFID chip (4) which is accommodated in a connector (3) assigned to the sensor or actuator (2).

## Revendications

1. Système d'automatisation comportant une unité de commande (1) à laquelle est raccordée au moins un capteur ou actionneur (2) auquel est associé un connecteur (3) pour le raccordement à l'unité de commande (1), un lecteur (5) étant prévu pour lire sur une puce RFID (4) des données qui sont utilisées dans l'unité de commande (1), **caractérisé en ce que** le connecteur (3) comporte la puce RFID (4) et **en ce que** les données, qui sont mémorisées dans la puce RFID (4) sont des données importantes de l'actionneur ou du capteur (2).

2. Système d'automatisation selon la revendication 1, **caractérisé en ce que** le connecteur (3) est relié fixe au capteur ou à l'acteur (2) par une ligne (8).

3. Système d'automatisation selon la revendication 1 ou 2, **caractérisé en ce que** l'unité de commande (1) contient le lecteur (5).

4. Système d'automatisation selon la revendication 3, **caractérisé en ce que** le lecteur (5) fait partie d'un module (6) dans l'unité de commande.

5. Procédé d'exploitation d'un système d'automatisation et d'une unité de commande (1) à laquelle est raccordé au moins un capteur ou un actionneur (2) auquel est associé un connecteur (3) pour le raccordement à l'unité de commande (1), un lecteur (5) étant prévu pour lire sur une puce RFID (4) des données qui sont utilisées dans l'unité de commande (1), **caractérisé en ce que** les données sont des données importantes du capteur ou de l'actionneur (2) et sont mémorisées dans la puce RFID qui est montée dans un connecteur (3) associé au capteur ou à l'actionneur (2).
